# EUROPEAN PATENT APPLICATION

(11) **EP 1 293 397 A1**
(43) Date of publication of application: **19.03.2003**
(21) Application number: 02078473.2
(22) Date of filing: 22.08.2002
(51) Int. Cl.: B60R 21/16

(54) **A method and an apparatus for the folding of an inflatable airbag**

(30) Priority: 13.09.2001 US 951892
(71) Applicant: Delphi Technologies, Inc., Troy, MI 48007 (US)
(72) Inventor: Varcus, Johannes-Alexander, 45549 Sprockhoevel (DE); Pinsenschaum, Ryan Todd, Vandalia, OH 45377 (US)
(74) Representative: Denton, Michael John

(57) **Abstract**

In a method for the folding of an inflatable airbag (10), the airbag mouth (11) of the airbag is fastened to a carrier (12) and a plunger (18) is advanced through an opening (20) provided in the carrier (12) and through the airbag mouth (11) into the airbag and against a front wall (22) of the airbag. The carrier (12) and the plunger (18) are subsequently pressed into a cover (28) of an airbag module together with the airbag. A plunger (18) provided with prongs (40,42) at its front end is used in folding, with the prongs being led through components of the airbag like a fabric diffuser (23), such that only one single layer of the front airbag wall is located between the front ends of the prongs (40,42) and the base element (26).

## Description

### FIELD OF THE INVENTION

The invention relates to a method and to an apparatus for the folding of an inflatable airbag for motor vehicles.

### BACKGROUND OF THE INVENTION

Methods and apparatuses of this kind serve to fold together an inflatable airbag to a size which permits the folded airbag to be mounted in a vehicle as a part of an airbag module for example as a driver's, a passenger's or a side airbag. The airbag must be folded in such a manner that it can deploy as quickly as possible and without damage to the airbag cushion in the event of a collision.

Airbags have recently been increasingly developed which are provided with internal chambers, diffusers made of fabric or diffusers made of metal in order to optimize the inflating behavior of the airbag. An automatic folding is not simply possible with such airbags or airbag modules due to the diffusers which adjoin the airbag mouth, in particular if it is endeavored to have only one single fabric layer located above the inflator when the airbag module is fully installed.

### SUMMARY OF THE INVENTION

The underlying problem (object) of the invention is to provide a method and an apparatus for the folding of an inflatable airbag by means of which an airbag can be folded as simply and rapidly as possible in such a manner that it can deploy ideally in the event of a collision, in particular if the airbag is provided with diffusers and/or internal chambers.

This object is satisfied by the features of the independent claims.

In accordance with the invention, the open end, i.e. the airbag mouth, of an airbag to be folded is fastened to a carrier, with subsequently a plunger being advanced through an opening provided in the carrier and through the airbag mouth into the airbag and against a front wall of the airbag. The carrier and the plunger are subsequently pressed, together with the airbag, into a cover of an airbag module which comprises a base element and a wall section connected to the base element. In accordance with the invention, a plunger is used which is provided at its front end with prongs, with the prongs being guided through components of the airbag and/or through components connected to the carrier such that only a single layer of the front airbag wall is located between the front end of the prongs and the base element.

Through the pushing in of the plunger into the airbag, when the carrier and the plunger have been introduced into the sleeve, there is a ring space between the inner wall of the sleeve and the plunger which serves as a folding space and in which the airbag cushion is pressed together to the desired height in a direction parallel to the plunger. The ring-shaped folding of the airbag which thereby arises permits a radial deployment of the airbag cushion.

In accordance with the invention the folding of the airbag need not take place within a space with a predetermined height. Furthermore, through the provision of the plunger during the pressing together of the airbag, the gas generator need not be involved.

Since, in accordance with the invention, a plunger provided with prongs is used for the folding, it is possible to lead the plunger through components of the airbag, for example through a fabric diffuser or through components connected to the carrier, for example a diffuser consisting of a solid material. It is ensured in this way that the front ends of the prongs can fix a single layer of the front airbag wall so that, when the airbag is fully folded, an opening is provided corresponding to the plunger, with the inflator being able to be inserted into said opening. When the inflator is inserted, only one single layer of the front airbag wall is located above the inflator, which has a positive effect on the deployment behavior of the airbag. Furthermore, in accordance with the invention, the manufacture of a ready-to-install airbag module is substantially accelerated since, on completion of the folding procedure, the airbag, which is fully pressed together and folded, is already located in its housing formed by the cover in which it is installed in the vehicle.

In accordance with a preferred embodiment of the method of the invention, the plunger is pushed so far into the airbag prior to the pressing of the airbag into the cover that the airbag is at least approximately stretched between the front end of the prongs and the carrier. Such a method step facilitates the subsequent folding process in which the airbag has to be pressed into the cover.

It is of particular advantage if, after the stretching of the airbag, the carrier is pressed into the cover and the single layer of the front airbag is thereby clamped between the base element and the prongs. It is ensured in this way that only one single layer of the front airbag wall is located above the inflator to be subsequently inserted. Then, only fabric layers of a fabric diffuser, which provide a uniform distribution of the gas flow, can be located between this single layer of the front airbag wall and the inflator.

In accordance with a further advantageous embodiment of the invention, the plunger can additionally be rotated around its longitudinal axis during folding. It is thereby possible, when a fabric diffuser is used, to subject this, but not the rest of the airbag, to a rotational folding.

The underlying object is furthermore satisfied by the features of the apparatus claim and in particular by a vertically displaceable holder for the fastening of an airbag carrier and a vertically displaceable plunger being provided, with the plunger being provided with prongs at its front end which are rounded at their front ends.

Such prongs can be led through components of the airbag or through components connected to the carrier, for example fabric diffusers or rigid diffusers, in a simply and gentle manner, whereupon a single layer of the front airbag wall can subsequently be clamped between the front end of the prongs and a base element of the cover.

It is of advantage here if the cross-section of the plunger corresponds at least substantially to that of the airbag mouth with respect to shape and size. A hollow space is provided in this way, when the airbag is fully folded, into which an inflator can subsequently be inserted.

The cross-sectional shape of the prongs is preferably matched to the outer contour of the airbag mouth. It is ensured in this way that the shape of the hollow space corresponds to that of the airbag mouth. It is preferred for this purpose for the prongs to have a curved cross-section, in particular to have the shape of a circle segment.

It is also of advantage for the prongs to taper conically in the direction of their front ends since, in this way, a simple and non-damaging insertion of the prongs into a fabric diffuser is possible.

In accordance with the invention, two prongs are preferably provided, with the peripheral length of the two prongs together amounting to at least 50% of the peripheral length of the airbag mouth. It is ensured in this embodiment that the hollow space formed by the prongs corresponds to the outer contour of the inflator at the end of the folding procedure.

Through the invention a simply constructed and variably applicable folding apparatus is created which provides a space with variable height and by means of which the airbag or the airbag cushion respectively can be pressed together to any height without it being necessary to involve the gas generator in this.

Further advantageous embodiments of the invention relating both to the folding method and to the folding apparatus are set forth in the dependent claims, in the description and in the drawings.

The invention will be described in the following in an exemplary manner with reference to the drawings.

### BRIEF DESCRIPTION OF THE DRAWINGS

Figs. 1a - 1f show a side view of an embodiment of a folding apparatus in accordance with the invention in different phases of a folding method in accordance with the invention, and
Fig. 2 shows a perspective view of a folding plunger in accordance with the invention.

### DETAILED DESCRIPTION OF THE PREFERRED EMBODIMENT

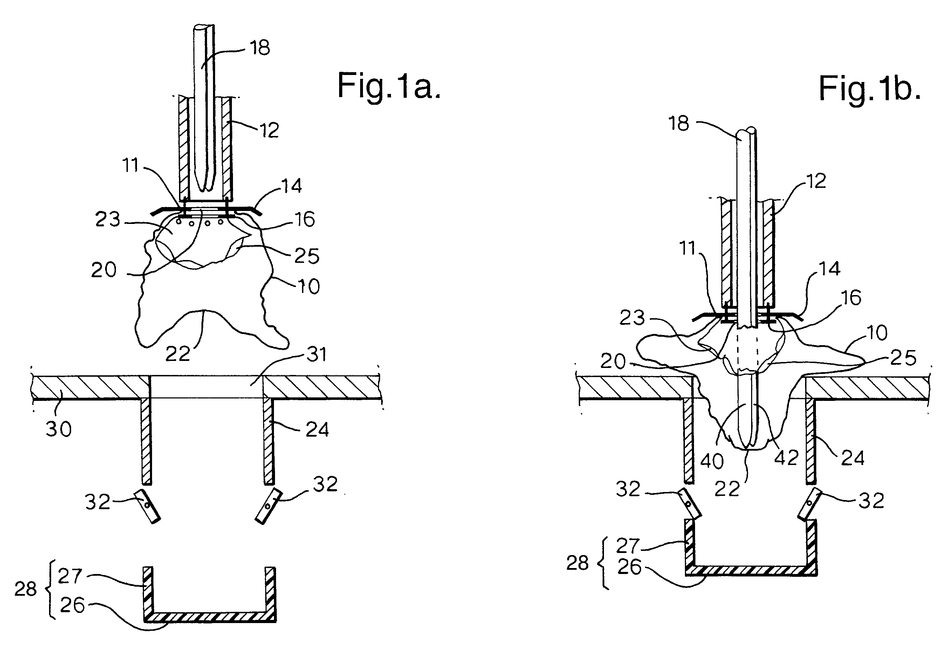

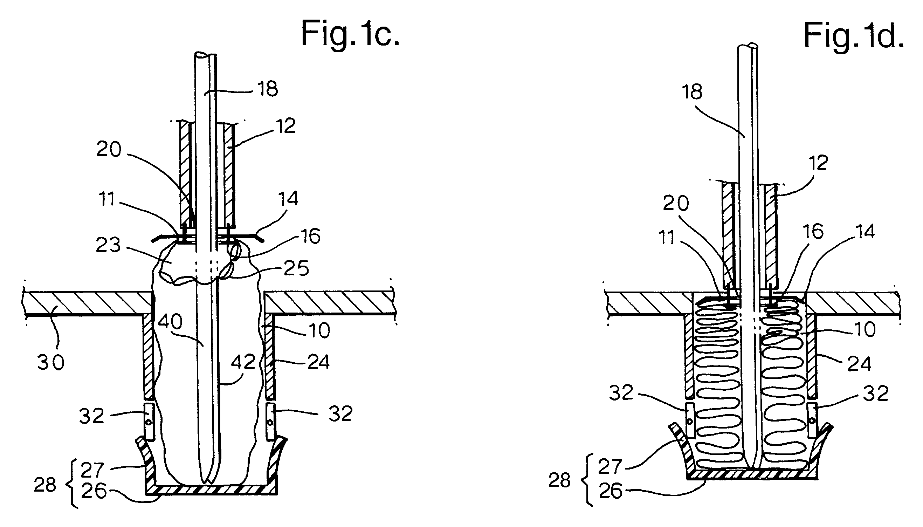

An embodiment of a folding apparatus in accordance with the invention is illustrated in Figs. 1a to 1f and is provided for carrying out a folding method in accordance with the invention.

The folding apparatus illustrated in Figs. 1a to 1f comprises in accordance with Fig. 1a a horizontally extending working plate 30 in which a cut-out 31 is provided. Beneath the working plate 30 there is arranged a sleeve 24, the inner wall of which closes off flush with the boundary region which bounds the cut-out 31 of the working plate 30 and of which the cross-sectional surface corresponds to that of the airbag 10 which has its final packing size.

Beneath the sleeve 24 there is arranged a cover 28 of an airbag module which comprises a base element 26 and a wall section 27 which is connected in a single piece to the base element 26 and which extends parallel to the sleeve wall. The free inner cross-sectional surface of the cover 28 corresponds to that of the sleeve 24.

Bending elements 32 which are shaped as rectangular parallelepipeds and are rotatably supported are provided between the sleeve 24 and the cover 28. The purpose of the bending elements 32 will be described in the following in the explanation of the folding method in accordance with the invention.

Above the working plate 30 a carrier element 12 is arranged which carries at its lower side a base plate 14 and a ring-shaped holder element 16 of an airbag module, which will be designated in the following as a holder ring. Together with the base plate 14 and the holder ring 16, the carrier element 12 forms a carrier at which an airbag 10 to be folded is fastened with its open end 11, which is also designated as the airbag mouth 10.

The airbag 10 is arranged with its mouth around a circular opening 20 which is formed in the base plate 14 and in the holder ring 16.

The cross-sectional surface of the base plate 14 is dimensioned in such a manner that the base plate 14 can be introduced into the sleeve 24 and the cover 28 with a perfect fit.

A plunger 18 is movable in the vertical direction relative to the carrier and is displaceable through the carrier element 12, which is formed in tube shape, and through the opening 20, which is provided in the base plate 14 and the holder ring 16, into the airbag 10.

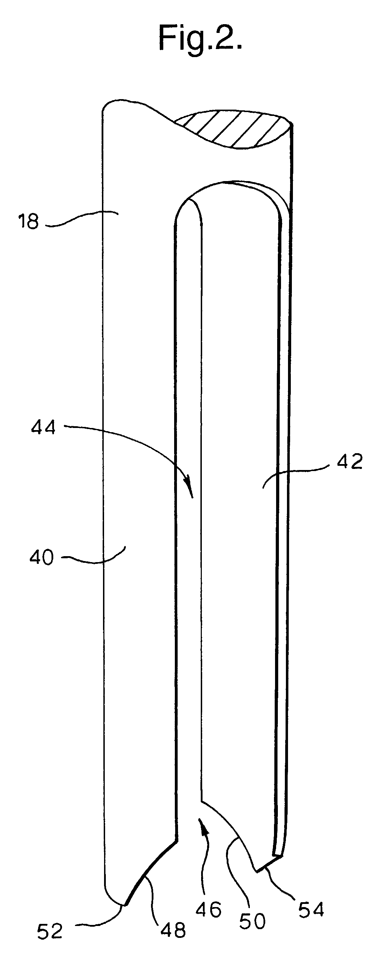

Fig. 2 shows an enlarged perspective view of the plunger 18 which has two prongs 40, 42 at its front end. The plunger 18 is generally formed as a hollow cylinder, with the two prongs 40 and 42 generally continuing the hollow cylindrical design, that is the cross-section of the prongs 40, 42 is formed as curved and corresponds to the circular cross-sectional shape of the plunger 18.

The two prongs 40, 42 are formed in that two U-shaped cut-outs 44, 46, which oppose one another, are formed in the originally fully hollow cylindrical component of the plunger 18.

The two prongs 40, 42 conically taper at their front ends due to chamfers 48, 50. The front tips 52, 54 of the prongs 40, 42 are lightly flattened in order to avoid damage to the airbag fabric.

As in particular Fig. 1c shows, the cut-outs 44, 46 extend over a length which is greater than the sum of the heights of the cover 25, the bending elements 32, the sleeve 24 and the working plate 30.

The diameter of the plunger 18 and the diameter of the opening 20 correspond at least substantially to the diameter of a non-illustrated inflator which is provided in the ready-to-install airbag module.

A folding method in accordance with the invention which can be carried out with the above explained folding apparatus will be described in the following with reference to Figs. 1a - 1f.

The airbag 10 to be folded is first fastened in the above described manner at the base plate 14 or at the holder ring 16 respectively with its open end 11 so that the airbag cushion in accordance with Fig. 1a hangs downwardly from the base plate 14 or from the holder ring 16 respectively. As the figures show, the airbag 10 has a fabric diffusor 23 at its inside which consists of two fabric layers which are partly sewn together such that openings 25 form in the peripheral region of these fabric layers. The outer fabric layer of the fabric diffusor 23 is likewise provided with a circular opening into which the inflator can be inserted.

Then the plunger 18 is pushed into the airbag 10 and against a front wall or the closed end 22 respectively of the airbag 10 as is illustrated in Fig. 1b. Before, after or along with the forward thrust movement of the plunger 18 into the airbag 10, the carrier element 12 is lowered.

As Fig. 1b shows, the prongs 40, 42 of the plunger 18 are inserted into the inside of the airbag 10 such that the prongs 40, 42 are each led through an opening 25 of the fabric diffuser 23. It is possible in this way for the front ends 52, 54 of the prongs 40, 42 to contact the front airbag wall and to thereby stretch the airbag 10.

In accordance with Fig. 1c the bending elements 32, which are mounted at the sleeve 24, are already brought during the stretching of the airbag cushion 10 into an introduction position in which they form an extension of the inner wall of the sleeve with an inner longitudinal side and bend an elastically deformably designed region of the wall section 27 of the cover 28 outwardly with an outward side. In this way the introduction opening of the cover 28 is widened.

In a continuing downward movement of the carrier element 12 and of the plunger 18 the front end of the plunger 18 arrives into an abutment with the base element 26 of the cover 28, with the closed end 22 of the airbag 10 lying in between.

During the time between stretching of the airbag 10 up to the abutment of the plunger 18 at the base element 26, preferably no or only a slight relative movement takes place between the plunger 18 and the carrier element 12, i.e. the distance between the open end 11 and the closed end 22 of the airbag 10 remains at least substantially constant during this time.

After the plunger 18 has abutted at the base element 26 of the cover 28, the carrier element 12 is lowered further and moved in the direction toward the base element 26. In this the airbag cushion 10, which is arranged in ring shape about the plunger 18, is pressed together, i.e. pressed into the cover 28 until, in accordance with Fig. 1e, the base plate 14 and the holder ring 16 are located within the cover 28 and the desired packing height has been achieved.

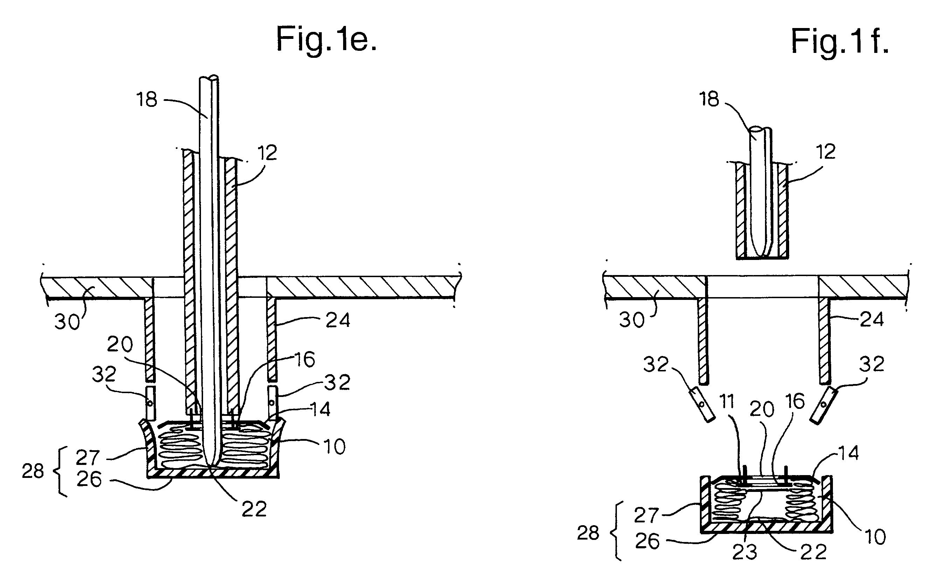

Then in accordance with Fig. 1f the connection between the carrier element 12 and the base plate 14 or the holder ring 16 respectively is released and the carrier element 12 and the plunger 18 are moved back upwardly. Moreover, the cover 28 is lowered so that the elastically deformable wall section 27 springs back, comes into engagement with the peripheral region of the base plate 14 and in this manner tightly holds the base plate 14, the holder ring 16 and the pressed together airbag 10.

The airbag 10, which is pressed together to its final packing size in accordance with Fig. 1f, is located ready for installing within its cover 28, which forms the housing of the airbag module, with the airbag 10 being pressed together in ring shape about a central free space which remains after the withdrawing of the plunger 18 and into which a non-illustrated inflator of the airbag module can be inserted. The plunger 18 is dimensioned in such a manner that the free space in the airbag module has the dimensions required for the inflator.

Through the invention a rapid and simple to perform method for the folding of an airbag is created in which on the one hand it is provided for the airbag cushion to be pressed together in ring shape in order to enable a radial deployment in the event of a collision.

The plunger 18 of the folding apparatus in accordance with the invention fulfils a plurality of functions in that it serves as a dummy for an inflator generator which is later to be inserted into the airbag module, in that it ensures that the airbag cushion 10 is pressed together in the shape of a ring about the gas generator in the ready to install airbag module, and in that it ensures that, with the exception of a layer of the fabric diffusor, only a single layer of the airbag cushion 10 is located between the inflator and the base element 26 of the cover 28 in the ready to install mount airbag module.

Although the above description has an airbag provided with a fabric diffuser as its subject, it is assumed that the method of the invention and the apparatus of the invention can be used in the same manner in airbag modules which have a fixed diffuser. In this way, the prongs of the plunger can be led through the openings in the diffuser in the same way.

## Claims

1. A method for the folding of an inflatable airbag for motor vehicles which comprises the steps that
the mouth of an airbag to be folded is fastened at a carrier;
a plunger is advanced into the airbag through an opening in the carrier and through the airbag mouth and against a front wall of the airbag; and
the carrier and the plunger are introduced into a cover of an airbag module together with the airbag, said cover comprising a base element and a wall section connected to the base element,
wherein a plunger provided with prongs at its front end is used whose prongs are led through components of the airbag and/or through components connected to the carrier such that only one single layer of the front airbag wall is located between the front ends of the prongs and the base element.

2. A method in accordance with claim 1, wherein the plunger is pushed so far into the airbag before the airbag is pressed into the cover that the airbag is at least approximately stretched between the front end of the prongs and the carrier.

3. A method in accordance with claim 2, wherein the carrier is pressed into the cover after the stretching of the airbag and the single layer of the front airbag wall is clamped between the base element and the prongs.

4. A method in accordance with claim 1, wherein the plunger is additionally rotated around its longitudinal axis during folding.

5. An apparatus for the folding of an inflatable airbag having an airbag mouth, in particular for the carrying out of a method in accordance with at least one of the preceding claims, comprising a vertical holder for the fastening of an airbag carrier and a vertically displaceable plunger, wherein the plunger is provided at its front end with prongs rounded at their front ends.

6. An apparatus in accordance with claim 5, wherein the cross-section of the plunger corresponds at least substantially to that of the airbag mouth with respect to shape and size.

7. An apparatus in accordance with claim 5, wherein the cross-sectional shape of the prongs is matched to the outer contour of the airbag mouth.

8. An apparatus in accordance with claim 5, wherein the prongs have a curved cross-section.

9. An apparatus in accordance with claim 5, wherein the prongs conically taper in the direction of their front ends.

10. An apparatus in accordance with claim 5, wherein at least two prongs are provided, with the peripheral length of the two prongs together amounting to at least 50% of the peripheral length of the airbag mouth.
